(19) Europäisches Patentamt / European Patent Office / Office européen des brevets

(11) **EP 3 009 974 A1**

(12) **EUROPEAN PATENT APPLICATION**

(43) Date of publication:
**20.04.2016 Bulletin 2016/16**

(51) Int Cl.:
**G06Q 30/00** *(2012.01)*    **G06Q 30/06** *(2012.01)*

(21) Application number: **15189441.7**

(22) Date of filing: **12.10.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **13.10.2014   KR 20140137667**

(71) Applicant: **Samsung Electronics Co., Ltd.
Gyeonggi-do 16677 (KR)**

(72) Inventors:
 • **Choi, Yoon-Jung
  Seongnam-si (KR)**
 • **Kim, Hee-Jung
  Seongnam-si (KR)**
 • **Lee, Kyu-Ho
  Seoul (KR)**
 • **Kim, Ji-Youn
  Seoul (KR)**
 • **Na, Hae-Ree
  Seoul (KR)**

(74) Representative: **Nederlandsch Octrooibureau
P.O. Box 29720
2502 LS The Hague (NL)**

(54) **METHOD AND APPARATUS FOR PROVIDING CONTENT SERVICE**

(57)    A method for providing a content service and an electronic device thereof is provided. The electronic device includes a display configured to display content that contains at least a first item. The electronic device also includes an input interface configured to detect an input for at least the first item contained in the content. The electronic device further includes a processor configured to, when an input for the first item contained in the content is detected, display, on the display, at least one piece of information corresponding to user information of the electronic device among information related to the first item.

FIG.2

EP 3 009 974 A1

**Description**

**TECHNICAL FIELD**

The present disclosure relates to a method for providing a content service in a server and an apparatus thereof.

**BACKGROUND**

Recently, with the rapid development of electronic devices, such as smart phones and tablet PCs (Personal Computer), the electronic device, which provides functions, such as a wireless voice call, and the exchange of information, has been a necessity for users. In the early stage of the spread, the electronic device has been merely regarded as a portable device capable of providing a wireless call function. However, with the advancement of technology and the introduction of the wireless Internet, the electronic device has been developed into a multimedia device that performs functions, such as managing a schedule, gaming, remote-controlling, photographing images, surfing the Internet, providing an SNS, or the like, as well as the typical wireless-calling, in order to thereby meet various user demands. In particular, in recent years, digital magazines have been provided through the electronic devices. The digital magazine refers to a digitized magazine of a real magazine, which has been developed in order to allow the user to use a variety of items through the electronic device.

**SUMMARY**

It is a primary object to provide a method that enables the user to directly identify the information on a specific item in the case where the user wishes to identify the detailed information on the corresponding item contained in the digital magazine.

An embodiment of the present disclosure provides a method and an apparatus for providing a service through the items contained in the digital magazine in the server. Another embodiment of the present disclosure provides a method and an apparatus for registering the information related to each item contained in the digital magazine in the server. Another embodiment of the present disclosure provides a method and an apparatus for providing the information related to the item contained in the digital magazine on the basis of user information, when the corresponding item is selected in the electronic device. Another embodiment of the present disclosure provides a method and an apparatus for controlling the displaying of the information related to the items on the basis of the number of times that each piece of information related to the items contained in the digital magazine is selected in the electronic device. Another embodiment of the present disclosure provides a method and an apparatus in which, if an input for selecting the information related to the item contained in the digital magazine is received, the electronic device provides a service corresponding to the information related to the selected item.

In a first embodiment, an electronic device is provided. The electronic device includes a display configured to display content that contain at least a first item. The electronic device also includes an input interface configured to detect an input for at least the first item contained in the content. The electronic device further includes a processor configured to, when an input for the first item contained in the content is detected, display, on the display, at least one piece of information corresponding to user information of the electronic device among information related to the first item.

In a second embodiment, a method implemented using an electronic device is provided. The method includes detecting an input for at least a first item contained in content. The method also includes when an input for the first item contained in the content is detected, displaying at least one piece of information corresponding to user information of the electronic device among information related to the first item.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

**BRIEF DESCRIPTION OF THE DRAWINGS**

For a more complete understanding of the present disclosure and its advantages, reference is now made to the following description taken in conjunction with the accompanying drawings, in which like reference numerals represent like parts:

FIG. 1 is an example diagram of an electronic device displaying the information related to the item contained in the digital magazine according to this disclosure;

FIG. 2 is a block diagram of an example server according to this disclosure;

FIG. 3 illustrates an example network environment that includes an electronic device according to this disclosure;

FIG. 4 is a diagram illustrating an example signal flow for controlling the digital magazine in an electronic device according to this disclosure;

FIG. 5 is a flowchart illustrating an example operation of an electronic device according to this disclosure;

FIGs. 6A, 6B, 6C, and 6D are example diagrams of displaying the item-related information on the basis of user information in an electronic device according to this disclosure;

FIG. 7 illustrates an example of controlling the displaying of the selected item in an electronic device according to this disclosure;

FIGs. 8A, 8B, and 8C illustrate an example of providing the item-related information in an electronic device according to this disclosure;

FIG. 9 illustrates an example of removing the item-related information in an electronic device according to this disclosure;

FIG. 10 is an example diagram of displaying the item-related information on the basis of friend information of the user in an electronic device according to this disclosure; and

FIG. 11 is a block diagram of an electronic device according to this disclosure.

**DETAILED DESCRIPTION**

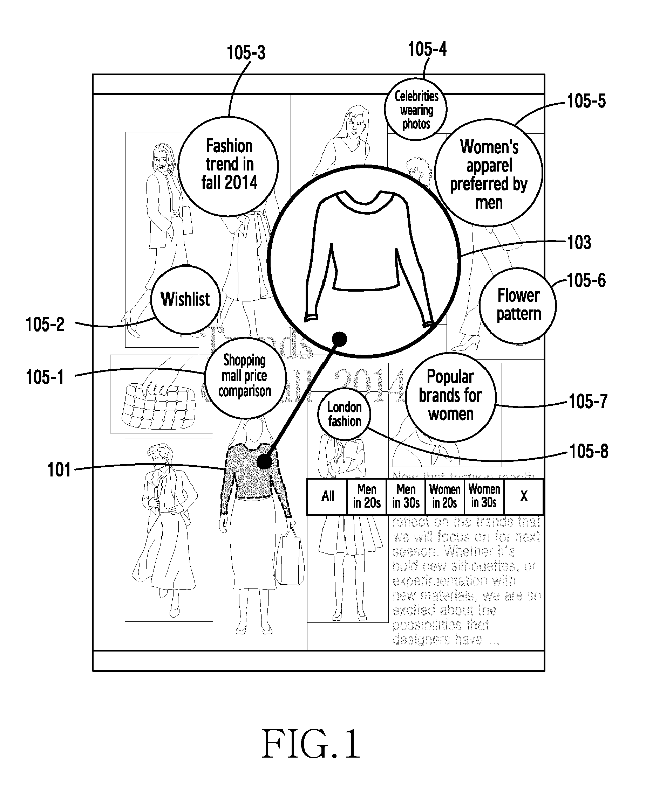

FIGURES 1 through 11, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. Hereinafter, embodiments of the present disclosure are described in detail with reference to the accompanying drawings. Those of ordinary skill in the art will recognize that various changes and modifications of the embodiments described herein can be made without departing from the scope of the present disclosure. In addition, descriptions of well-known functions and constructions may be omitted for clarity and conciseness. The same reference symbols are used throughout the drawings to refer to the same or like parts.

Expressions such as "include" or "may include" that may be used in the present disclosure indicate existence of a disclosed relevant function, operation, or element, etc., and do not limit additional one or more functions, operations, or elements, etc. Also, it should be understood that terms such as "include" or "have" in the present disclosure are intended for designating the existence of a characteristic, a number, a step, an operation, an element, a part, or a combination thereof described in this disclosure and do not exclude in advance the existence or additional possibility of one or more other characteristics, numbers, steps, operations, elements, parts, or a combination thereof.

An expression such as "or", etc. in the present disclosure includes a certain and all combinations of words listed together. For example, "A or B" may include A and may include B, or include both A and B.

In the present disclosure, expressions such as "1st", "2nd", "first" or "second", etc. may modify various elements of the present disclosure but do not limit relevant elements. For example, these expressions do not limit sequence and/or importance, etc. of relevant elements. The expressions may be used for distinguishing one element from another element. For example, both a first user apparatus and a second user apparatus are all user apparatuses, and represent different user apparatuses. For example, a first element may be referred to as a second element, and similarly, the second element may be referred to as the first element.

When it is mentioned that a certain element is "connected to" or "accesses" another element, it should be understood that the element may be directly connected to another element or may directly access another element, but still another element may exist in the middle. In contrast, when it is mentioned that a certain element is "directly connected to" or "directly accesses" another element, it should be understood that still another element does not exist in the middle. Terminology used in the present disclosure is used for explaining a specific embodiment and is not intended for limiting the present disclosure. Unless clearly expressed otherwise, expression of the singular includes expression of the plural. Unless defined differently, all terminologies used herein including technological or scientific terminologies have the same meaning as that generally understood by a person of ordinary skill in the art to which the present disclosure belongs. It should be understood that generally used terminologies defined by a dictionary have meanings consistent with meanings of a related technology, and unless clearly defined in the present disclosure, they are not understood as an ideal or excessively formal meaning.

An electronic device according to the present disclosure can be a device including a communication function. For example, an electronic device includes at least one of, but is not limited to, a smartphone, a tablet personal computer (PC), a mobile phone, a video phone, an e-book reader, a desktop PC, a laptop PC, a netbook computer, a Personal Digital Assistant (PDA), a Portable Multimedia Player (PMP), an MP3 player, a mobile medical device, a camera, or a wearable device (such as a head-mounted-device (HMD) such as electronic glasses, an electronic clothing, an electronic bracelet, an electronic necklace, an electronic appcessory, an electronic tattoo, or a smartwatch).

The electronic device can be a smart home appliance having a communication function. A smart home appliance includes, but is not limited to, at least one of a television, a Digital Video Disk (DVD) player, an audio, a refrigerator, an air conditioner, a cleaner, an oven, an electronic range, a washing machine, an air purifier, a set-top box, a TV box (such as SAMSUNG HOMESYNC®, APPLE TV®, or GOOGLETV®), game consoles, an electronic dictionary, an electronic key, a camcorder, or an electronic frame.

The electronic device includes, but is not limited to, at least one of various medical devices (such as Magnetic Resonance Angiography (MRA), Magnetic Resonance Imaging (MRI), Computed Tomography (CT), a shooting device, an ultrasonic device, or the like), a navigation device, a Global Positioning System (GPS) receiver, an event data recorder (EDR), a flight data recorder (FDR), an automobile infotainment device, electronic equipment for a ship (such as a navigation device for a ship, a gyro compass, or the like), avionics, a security device, or a robot for an industrial use or a home use.

The electronic device includes, but is not limited to, at least one of furniture or a portion of a building/structure including a communication function, an electronic board, an electronic signature receiving device, a projector, or various measurement devices (such as waterworks, electricity, gas, or radio wave measuring device, or the like). The electronic device can be a combination of one or more of the above-described devices. Also, the electronic device is not limited to the above-described devices.

Hereinafter, an electronic device is described with reference to the accompanying drawings. A user as described herein indicates a person who uses an electronic device or a device (such as an artificial intelligence electronic device) that uses the electronic device.

Hereinafter, in the embodiments of the present disclosure, the description will be made of a digital magazine that contains one or more pieces of content for convenience of explanation. However, the embodiments of the present disclosure below are not limited to the digital magazine including one or more pieces of content, and can be applied to various types of pieces of content including one or more items. For example, the embodiments of the present disclosure below can be applied to a web page containing product items that are available for the user to purchase in the same manner.

Recently, with the rapid development of electronic devices, such as smart phones and tablet PCs (Personal Computer), the electronic device, which provides functions, such as a wireless voice call, and the exchange of information, has been a necessity for users. In the early stage of the spread, the electronic device has been merely regarded as a portable device capable of providing a wireless call function. However, with the advancement of technology and the introduction of the wireless Internet, the electronic device has been developed into a multimedia device that performs functions, such as managing a schedule, gaming, remote-controlling, photographing images, surfing the Internet, providing an SNS, or the like, as well as the typical wireless-calling, in order to thereby meet various user demands.

In particular, in recent years, digital magazines have been provided through the electronic devices. Here, the digital magazine refers to a digitized magazine of a real magazine, which has been developed in order to allow the user to use a variety of items through the electronic device. In general, the users check various items through the digital magazine. However, if the user wishes to identify the information on a specific item among the items contained in the digital magazine, it is difficult to immediately check the information on the corresponding item in the digital magazine. In this case, in order to identify the information on a specific item, the user is required to terminate the digital magazine and search for the information on the specific item using a separate search engine, which is inconvenient for the user.

FIG. 1 is a diagram of an example electronic device displaying the information related to the items contained in the digital magazine according to this disclosure. Referring to FIG. 1, according to an embodiment of the present disclosure, the electronic device provides a function by which the user selects and purchases at least one item among at least one items displayed on the digital magazine. For example, the electronic device provides a function by which the user chooses the items (such as shoes, skirts, bags, tops, bottoms, fashion items, accessories, or the like) that are displayed on the digital magazine.

According to an embodiment of the present disclosure, when a specific item displayed on the digital magazine is selected, the electronic device displays the information related to the selected item. The item-related information includes related keywords, price information, or additional information in relation to each item. For example, if a top A 101 is selected from among a plurality of items displayed on the digital magazine, the electronic device displays the top A 101 to be highlighted, and at the same time, displays the top A 101 to be enlarged, in order to show that the top A 101 has been selected. Furthermore, the electronic device displays the keywords indicated at105-1, 105-2, 105-3, 105-4, 105-5, 105-6, 105-7, and 105-8 related to the top A 101 in the adjacent area to the enlarged display area 103 of the top A 101. According to an embodiment, the electronic device displays the related keywords such that the related keyword that has been most frequently selected by the user is displayed to be most highly highlighted, whereas the related keyword that has been most rarely selected by the user is displayed to be least highlighted. For example, the electronic device displays the related keywords such that the related keyword that has been most frequently selected by the user is displayed in the largest font, whereas the related keyword that has been most rarely selected by the user is displayed in the smallest font. For another example, the electronic device displays the related keywords such that the related keyword that has been most frequently selected by the user is displayed in the largest area, whereas the related keyword that has been most rarely selected by the user is displayed in the smallest area. For another example, the electronic device displays the related keywords such that the related keyword that has been most frequently selected by the user is displayed in the area closest to the display area of the corresponding item, whereas the related keyword that has been most rarely selected by the user is displayed in the area farthest from the display area of the corresponding item. For another example, the electronic device displays the related keywords such that the related keyword that has been most frequently selected by the user is displayed in the darkest color, whereas the related keyword that has been most rarely selected by the user is displayed in the lightest color.

In addition, in the case where the electronic device obtains the user information in advance through the logging-on process for the digital magazine service, the electronic device displays the keyword related to the item on the basis of the pre-obtained user information. For example, when the electronic device pre-obtains the information stating that the user is a woman in her twenties from the logging-on information of the user for the digital magazine service, the electronic device, in the case of displaying the related keywords of the selected item, displays the related keywords that have been most frequently selected or retrieved by women in their twenties among the related keywords of the selected item. For another example, when the electronic device pre-obtains the information stating that the user is a man in his thirties from the logging-on information of the user for the digital magazine service, the electronic device, in the case of displaying the related keywords of the selected item, displays the related keywords that have been most frequently selected or retrieved by men in their thirties among the related keywords of the selected item.

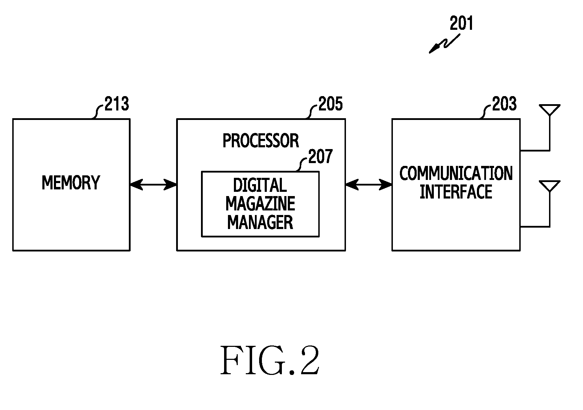

FIG. 2 is a block diagram of an example server according to this disclosure. Referring to FIG. 2, a server 201 includes a communication interface 203, a processor 205, and a memory 213. Hereinafter, the server 201 denotes a server that stores and manages at least one digital magazine, and provides at least one digital magazine in response to the request from the electronic device. In addition, the server 201 receives the information related to the items contained in the digital magazine from a content provider, and stores the item and the item-related information to be mapped with each other. The items can mean all items that are available for purchase from the server in the electronic device. For example, the items can include clothing, automobiles, food, books, or home appliances. According to an embodiment, the server 201 maps the item-related information with each item according to a preset learning method, and stores the same. For example, the server 201 maps the item-related information with each item contained in the digital magazine on the basis of the communication result with at least one electronic device that is connected with the server 201, and stores the same. The item-related information can include the related keywords, the price information, or the additional information in relation to each item.

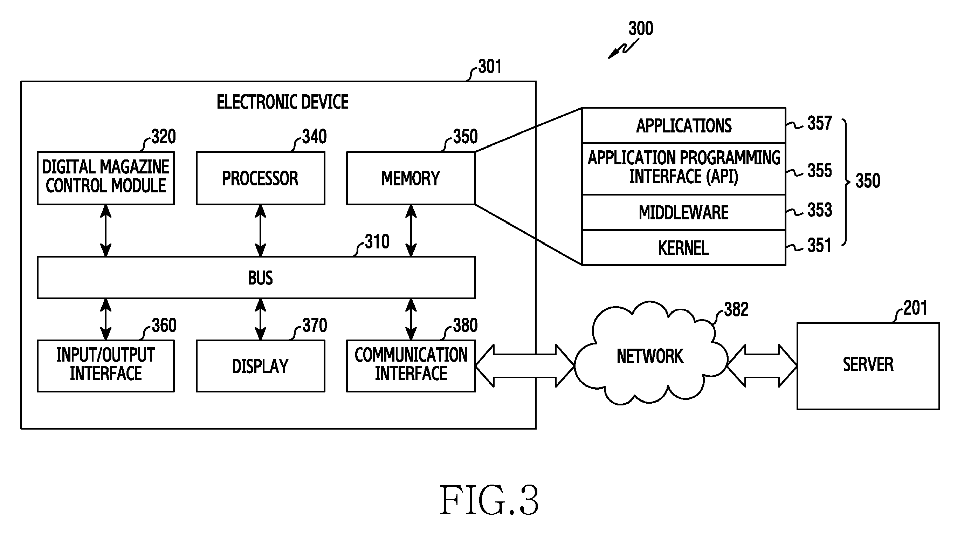

The communication interface 203 connects the communication between the server 201 and an external device (such as the electronic device 301 of FIG. 3). For example, the communication interface 203 is connected to a network through wireless communication in order to thereby communicate with the electronic device 301. The wireless communication, for example, includes at least one of wireless fidelity (Wifi), BLUETOOTH® (BT), BLUETOOTH® Low Energy (BLE), near field communication (NFC), satellite communication (such as the GPS), or cellular communication (such as LTE, LTE- A, CDMA, WCDMA, UMTS, WiBro, GSM, or the like).

The communication interface 203, according to an embodiment of the present disclosure, transmits the digital magazine, and the information related to the items contained in the digital magazine to at least one electronic device that is connected with or accesses the server 201. In addition, the communication interface 203 receives a request for the digital magazine from at least one electronic device connected thereto, and transmits, to the corresponding electronic device, the digital magazine corresponding to the received request. In addition, the communication interface 203 transmits the keywords related to the items contained in the digital magazine to at least one electronic device connected to the server 201. According to an embodiment of the present disclosure, the communication interface 203 receives a request for the searching using the keyword related to the items contained in the digital magazine from at least one electronic device connected to the server 201, and transmits the searching result using the related keyword according to the control of the processor 205. The processor 205 processes and controls the overall operation of the server 201. In particular, the processor 205, according to an embodiment of the present disclosure, includes a digital magazine manager 207.

The digital magazine manager 207 controls and processes the function of mapping the item-related information with at least one item contained in the digital magazine, and storing the same. The item-related information is received from the content provider, or is created based on the communication result with at least one electronic device connected to the server 201. The digital magazine manager 207 controls and processes the function of transmitting the digital magazine, and the keywords related to the items contained in the digital magazine to at least one electronic device connected with the server 201. According to an embodiment of the present disclosure, the digital magazine manager 207 receives a request for the searching using the keyword related to the item contained in the digital magazine from at least one electronic device connected to the server 201, and performs the searching using the related keyword, to then transmit the searching result to the corresponding electronic device. For example, the digital magazine manager 207 receives a request for the searching using the keyword (such as "shopping mall price comparison") related to the item "the top A" contained in the digital magazine from the first electronic device connected with the server 201. The digital magazine manager 207 searches for the price of the top A for each shopping mall, and provides the first electronic device with a list in which the searched prices for the shopping malls are compared with each other to be thereby displayed. The digital magazine manager 207 determines the importance of the keywords related to the corresponding items contained in the digital magazine or the number of times that the related keywords have been selected, based on the search request using the related keyword, which is received from at least one electronic device connected with the server 201. According to an embodiment, the digital magazine manager 207 provides the electronic device with the importance of each related keyword of the items or the number of times the selection when the digital magazine manager 207 provides the electronic device with the item-related information on the items contained in the digital magazine. According to another embodiment, the digital magazine manager 207 creates and/or configures the digital magazine such that the displaying of each keyword related to the items is to be controlled in the electronic device, based on the importance of each related keyword of the items contained in the digital magazine or the number of times the selection thereof.

The memory 213 stores instructions or data received from or created in the processor 205 and the communication interface 203. Although it is not shown in the drawing, the memory 213 includes programming modules, such as, a kernel, middleware, an application programming interface, or applications. Here, each of the programming modules can be implemented by software, firmware, hardware, or a combination of at least two of them. The memory 213, according to an embodiment of the present disclosure, stores at least one digital magazine, and stores a plurality of items contained in the digital magazine, and the item-related information on each item. For example, the memory 213 stores the keywords related to the items contained in the digital magazine, the price information, the additional information, the importance of the related keywords and/or the number of times the selection for the related keyword.

FIG. 3 illustrates an example network environment 300 that includes an electronic device 301 according to this disclosure. Referring to FIG. 3, the electronic device 301 includes a bus 310, a digital magazine control module 320, a processor 340, a memory 350, an input/output interface 360, a display 370, and a communication interface 380. The bus 310 is a circuit that connects the elements of the electronic device 301 to each other, and transmits communication data (such as a control message) between the elements of the electronic device 301.

The digital magazine control module 320 drives a digital magazine application using the processor 340 in order to thereby detect a digital magazine search event. When the digital magazine search event is detected, the digital magazine control module 320 makes a request to the server 201 for at least one digital magazine through the communication interface 380, and receives, from the server 201, at least one digital magazine and the information related to at least one digital magazine. The information related to the digital magazine includes the information (such as the price information, the additional information, the related keywords, the importance of the related keyword and/or the number of times the selection) related to at least one item contained in the digital magazine.

The digital magazine control module 320 provides an interface by which at least one digital magazine provided from the server 201 is displayed through the display 370 and at least one item contained in the digital magazine is to be selected. For example, if the digital magazine contains the items, such as apparel, fashion items, books, or accessories, the digital magazine control module 320 provides an interface by which the user is able to select the corresponding item.

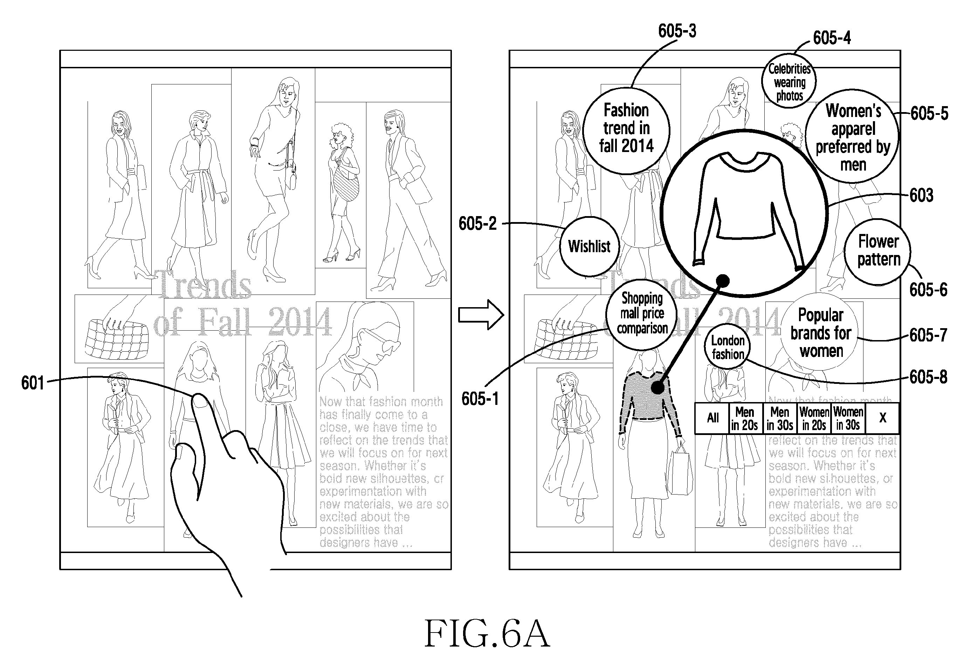

The digital magazine control module 320, according to an embodiment of the present disclosure, displays the item selected by the user to be highlighted among the items contained in the digital magazine. For example, digital magazine control module 320 changes the display of the boundary (for example, changing the thickness, changing the size, or changing the color) of the item selected by the user, or applies a specific graphic effect to the item selected by the user in order to thereby display the item selected by the user to be highlighted. In addition, the digital magazine control module 320, according to an embodiment of the present disclosure, enlarges the item 601 selected by the user among the items contained in the digital magazine, and additionally displays the same in a predetermined area of the screen 603, as shown in FIG. 6A.

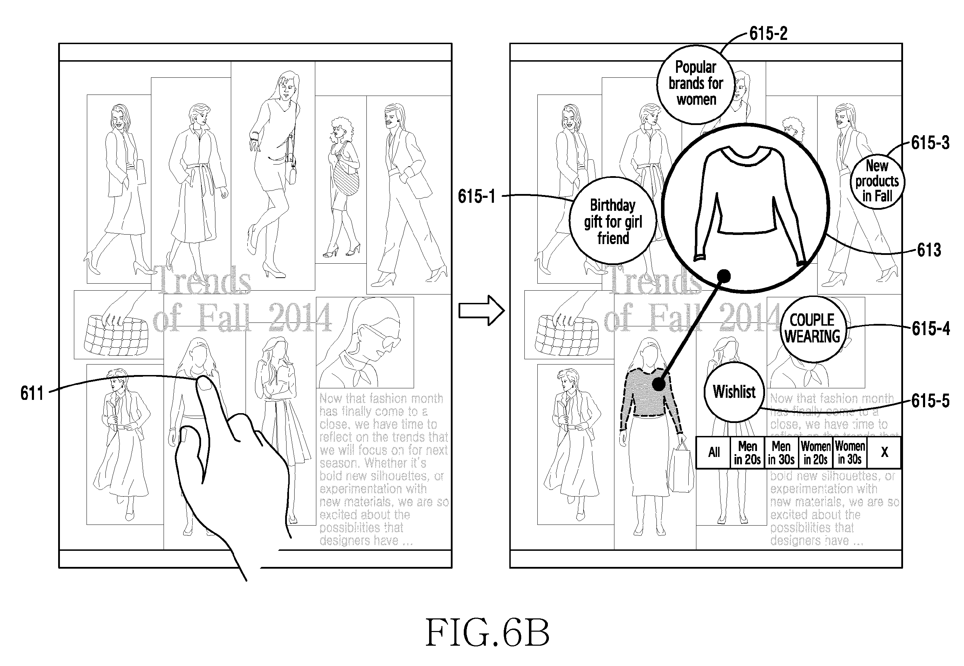

When a specific item is selected by the user from among the items contained in the digital magazine, the digital magazine control module 320 displays the information related to the corresponding item. According to an embodiment, the digital magazine control module 320 selectively displays only the information related to the user information among the information related to a specific item. For example, in the case where the user's logging-on information for the digital magazine service is pre-obtained, the digital magazine control module 320 selectively displays only the information related to the user's logging-on information among the information related to a specific item selected by the user. More specifically, as shown in FIG. 6A, if the user information "gender: female, age: twenties" is pre-obtained through the logging-on operation for the digital magazine service, the digital magazine control module320 selectively displays, on the display, only the related keywords at 605-1, 605-2, 605-3, 605-4, 605-5, 605-6, 605-7, and 605-8 corresponding to "female in twenties" among various related keywords of the specific items 601 and 603 selected by the user. For another example, as shown in FIG. 6B, if the user information "gender: male, age: thirties" is pre-obtained through the logging-on operation for the digital magazine service, the magazine control module 320 selectively displays, on the display, only the related keywords at 615-1, 615-2, 615-3, 615-4, and 615-5 corresponding to "male in thirties" among various related keywords of the specific items 611 and 613 selected by the user.

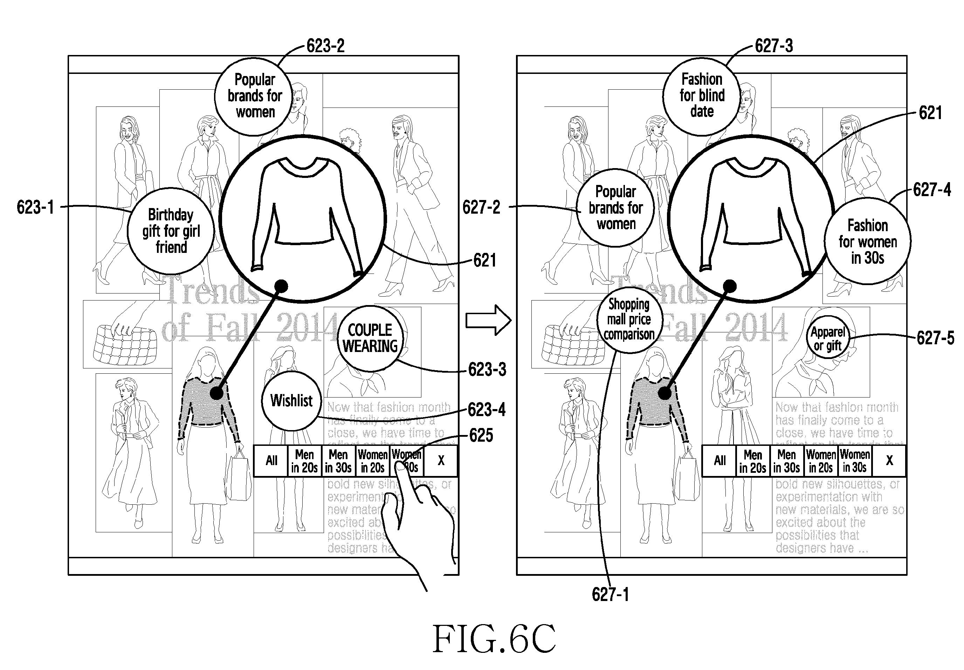

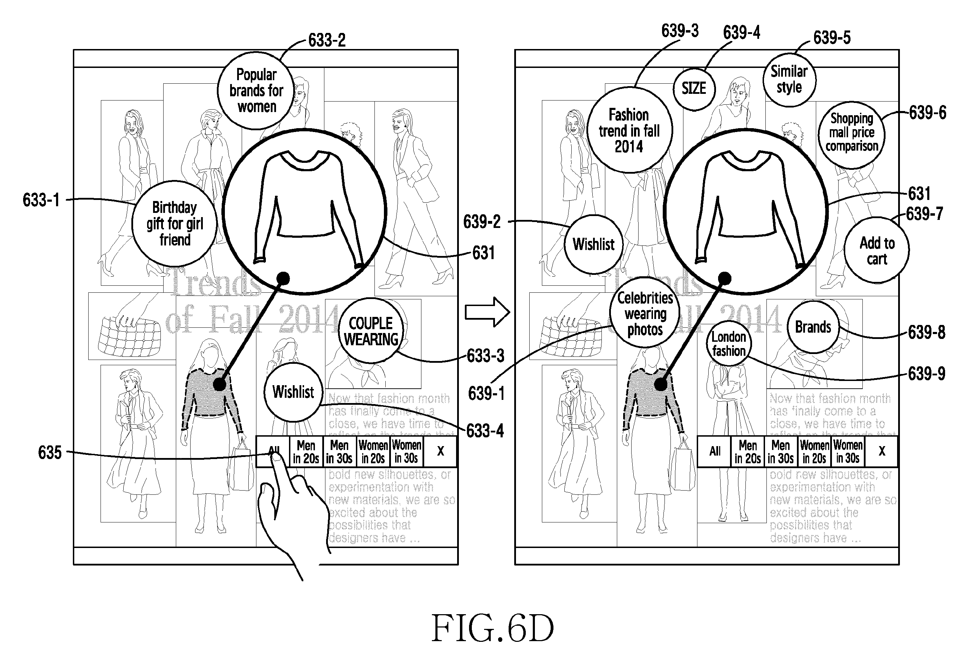

In addition, according to an embodiment, the digital magazine control module 320 separates the information related to the items contained in the digital magazine into a plurality of groups according to gender and age, and selectively displays only the item-related information corresponding to the group selected by the user. For example, the digital magazine control module 320 separates the information related to the items contained in the digital magazine into the information corresponding to a group of men in their twenties, the information corresponding to a group of women in their twenties, the information corresponding to a group of men in their thirties, the information corresponding to a group of women in their thirties, and the information corresponding to a group of others. The digital magazine control module 320 displays a group list (such as a group list comprised of "All", "Men in 20s," "Women in 20s," "Men in 30s," "Women in 30s," and "Others") on the display 370. The digital magazine control module 320 selectively displays the item-related information corresponding to the group selected by the user. More specifically, as shown in FIG. 6C, the digital magazine control module 320, based on the user information "men in their thirties," selectively displays only the related keywords at 623-1, 623-2,623-3, and 623-4 corresponding to the group of men in their thirties among the information related to the specific item 621 on the screen, and if the group "Women in 30s" 625 is selected by a user input, displays, on the screen, the related keywords at 627- 1, 627-2, 627-3, 627-4, and 627-5 corresponding to the group of women in their thirties rather than the related keyword at 623-1, 623-2, 623-3, and 623-4 corresponding to the group of men in their thirties. For another example, as shown in FIG. 6D, the digital magazine control module 320, based on the user information "men in their thirties," selectively displays only the related keywords at 633-1, 633-2, 633-3, and 633-4 corresponding to the group of men in their thirties among the information related to the specific item 631 on the screen, and if the group "All" 635 is selected by a user input, display, on the screen, the related keywords at 639-1, 639-2, 639-3, 639-4, 639-5, 639-6, 639-7, 639-8, and 639-9 corresponding to the total group rather than the related keyword at 633-1, 633-2, 633-3, and 633-4 corresponding to the group of all. In the embodiment of the present disclosure, the groups separating the information related to the items include the same information or different information from each other. For example, the group "All" and the group "Men in 20s" can include at least one of the same related keywords, and the group "Men in 20s" and the group "Women in 20s" can include at least one of the same related keywords. In addition, one of the group "All" and the group "Men in 20s" can include at least one related keyword that does not belong to the other group, and one of the group "Men in 20s" and the group "Woman in 20s" can include at least one related keyword that does not belong to the other group.

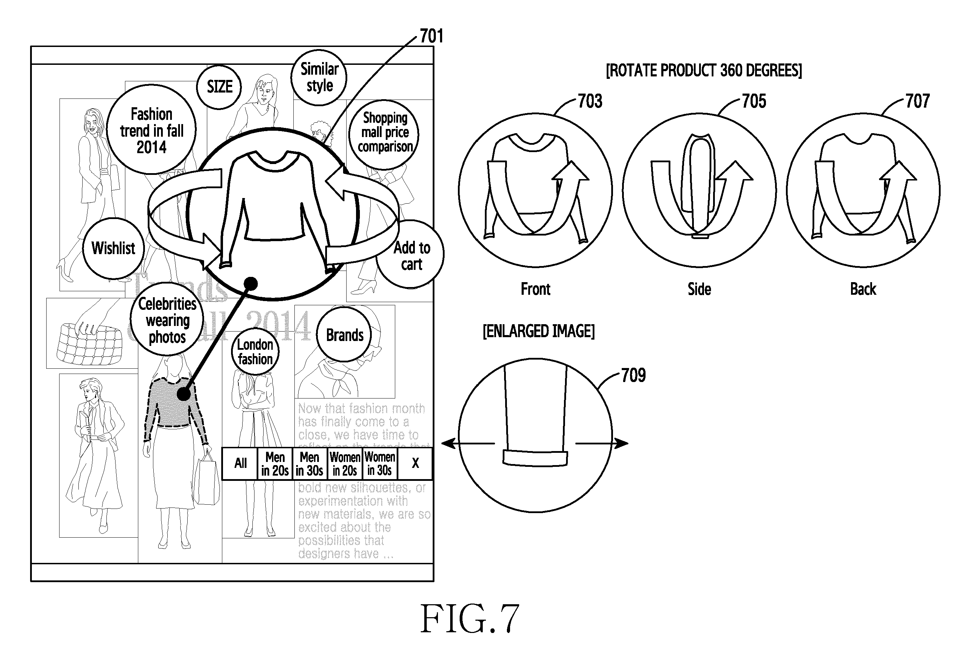

According to an embodiment of the present disclosure, the digital magazine control module 320 controls a function of rotating the item that is additionally displayed by the user's selection, or a function of enlarging or reducing the same. For example, as shown in FIG. 7, when an input for rotating the content 701 additionally displayed by the user's selection is received, the digital magazine control module 320 makes a control to display the item such that the displayed front view 703 of the item changes into the side view 705 or the back view 707 of the item. In addition, when an input for additionally enlarging the additionally displayed item 701 is received, the digital magazine control module 320 makes a control to display the item such that a specific portion of the item is additionally enlarged (see 709).

According to an embodiment, when displaying the keywords related to the selected item, the digital magazine control module 320 displays the related keywords such that the related keyword, which has been most frequently selected by the user among the related keywords to be displayed, is displayed to be most highly highlighted, whereas the keyword, which has been most rarely selected by the user, is displayed to be least highlighted. For example, as shown in FIGs. 6A to 6D, the digital magazine control module 320 controls the related keyword, which has been most frequently selected by the user, to be most highly highlighted by adjusting the font size of the related keyword, the size of the area where the related keyword is to be displayed, the position of the area where the related keyword is to be displayed (such as a distance to the corresponding item), the transparency of the area where the related keyword is to be displayed, and/or the display color of the related keyword. According to an embodiment, if the area, where the related keyword is to be displayed, is a circle, the digital magazine control module 320 determines the size of the area where the related keyword is to be displayed, using Equation 1 below.

Equation 1

$$CircleRadius = Min(MaxRadius, DefaultSize + ClickCount \times 5dp)$$

In Equation 1, "CircleRadius" denotes the radius of the circle where the related keyword is to be displayed, and Min () means a function of selecting a minimum value. "MaxRadius" refers to a preset maximum radius, and "DefaultSize "means a predetermined default size. In addition, "ClickCount" denotes the number of times that the related keyword is selected by the user. If the related keyword is selected for the first time, the digital magazine control module 320 determines the final "CircleRadius" by adding a preset value (such as 10dp) to the radius determined by Equation 1.

According to another embodiment, the digital magazine control module 320 determines the position of the area where the related keyword is to be displayed, that is, the distance between the area where the related keyword is to be displayed and the corresponding content, using Equation 2 below.

Equation 2

$$ProximityDistance = Min(MinDistance, DefaultDistance - ClickCount \times 5dp)$$

In Equation 2, "ProximityDistance" means a distance between the area where the related keyword is to be displayed and the corresponding content, and Min () means a function of selecting a minimum value. "MinDistance" refers to a preset minimum distance, and "DefaultDistance" refers to a preset default distance. In addition, "ClickCount" refers to the number of times that the related keyword is selected by the user.

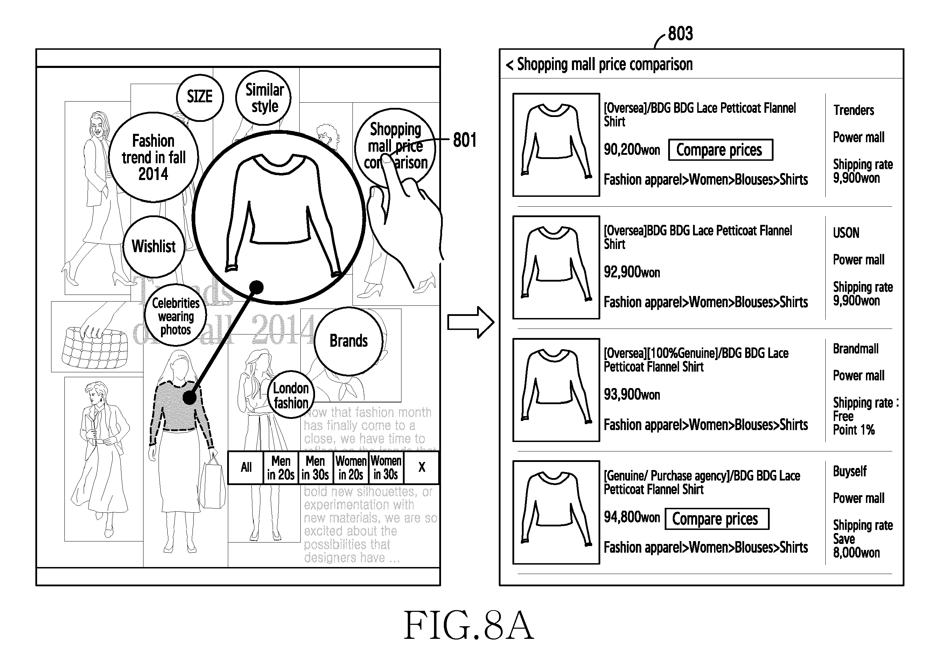

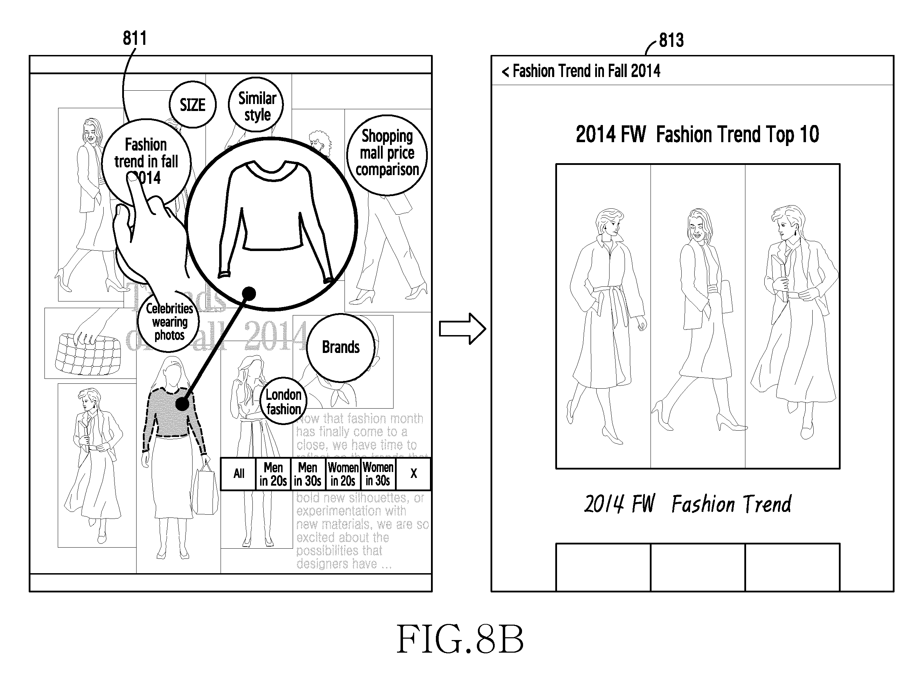

In addition, if a specific related keyword is selected by the user while the related keywords for a specific item are displayed, the digital magazine control module 320 displays the searching result using the selected related keyword with respect to the specific item on the screen. For example, as shown in FIG. 8A, if the related keyword "shopping mall price comparison" 801 is selected by the user while the related keywords for a specific item are displayed, the digital magazine control module 320 communicates with the server 201 on the basis of the digital magazine application to thereby obtain the searching result corresponding to "shopping mall price comparison" 801, and displays a list 803 that includes price information on the specific item for each shopping mall on the screen. For another example, as shown in FIG. 8B, if the related keyword "Fashion Trend in Fall 2014" 811 is selected by the user while the related keywords for a specific item are displayed, the digital magazine control module 320 communicates with the server 201 on the basis of the digital magazine application to thereby obtain the searching result corresponding to "Fashion Trend in Fall 2014" 811, and displays the searching result 813 showing the fashion trend in the fall of 2014.

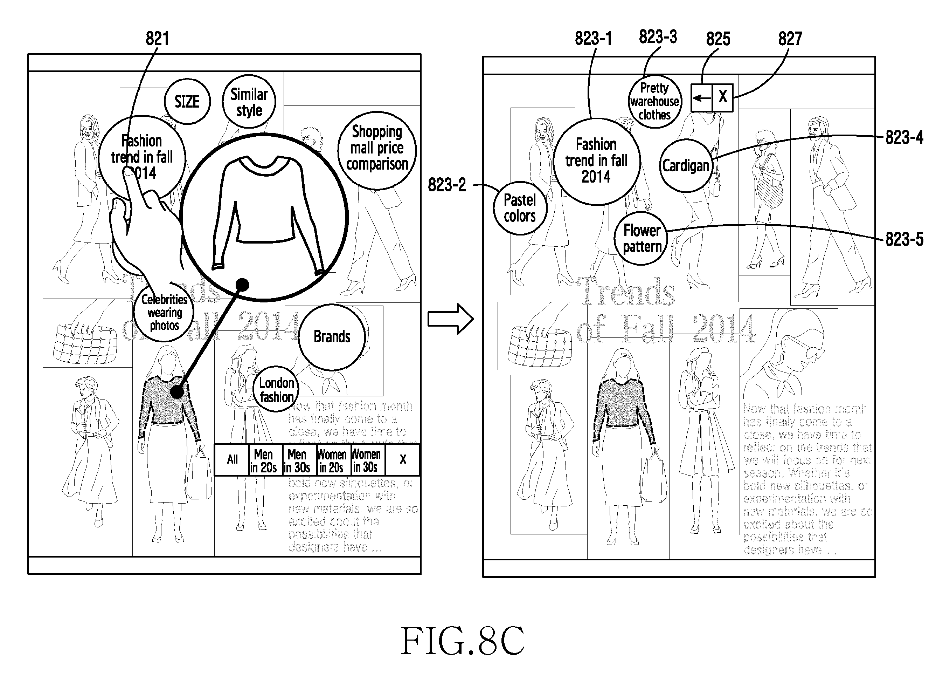

In addition, if an input for a specific related keyword is received while the related keywords for a specific item are displayed, the digital magazine control module 320 displays related sub-keywords with respect to the specific related keyword. For example, as shown in FIG. 8C, if an input for the related keyword "Fashion Trend in Fall 2014" 821 is received from the user while the related keywords for a specific item are displayed, the digital magazine control module 320 converts the image in which the specific item and the related keywords for the specific item are displayed, as shown in the left diagram of FIG. 8C, into the image in which "Fashion Trend in Fall 2014" 823-1 and the related sub-keywords at 823-2, 823-3, 823-4, and 823-5 with respect thereto are displayed, as shown in the right diagram of FIG. 8C. Here, the image, which displays the related sub-keywords for the selected related keyword, as shown in the right diagram of FIG. 8C, includes an icon 825 for returning to the previous image, and an icon 827 for terminating the displaying of the information related to the selected item. For example, if the icon 825 for returning to the previous image is selected in the right diagram of FIG. 8C, the digital magazine control module 320 controls the function for displaying the image as the left diagram of FIG. 8C.

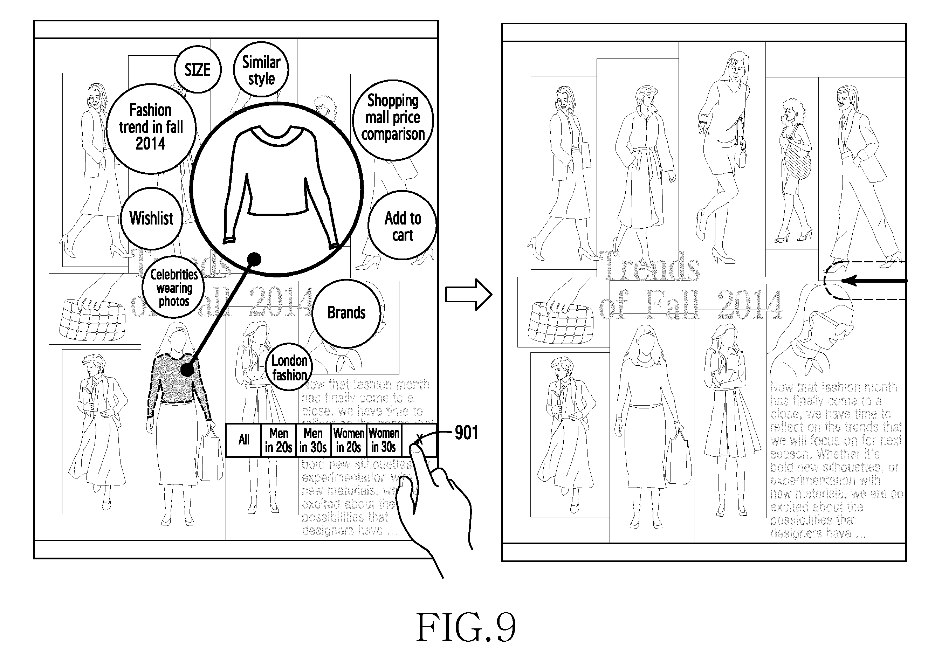

In addition, if a predetermined close icon is selected, if a predetermined ending gesture is detected, or if a back button is selected while the related keywords for a specific item are displayed, the digital magazine control module 320 removes the item-related information displayed on the screen. For example, as shown in FIG. 9, if a predetermined close icon 901 is selected while the related keywords corresponding to the total group, among the related keywords for a specific item, are displayed, the digital magazine control module 320 removes the displayed related keywords and the enlarged and displayed item from the screen, and returns to the state in which only the digital magazine is displayed.

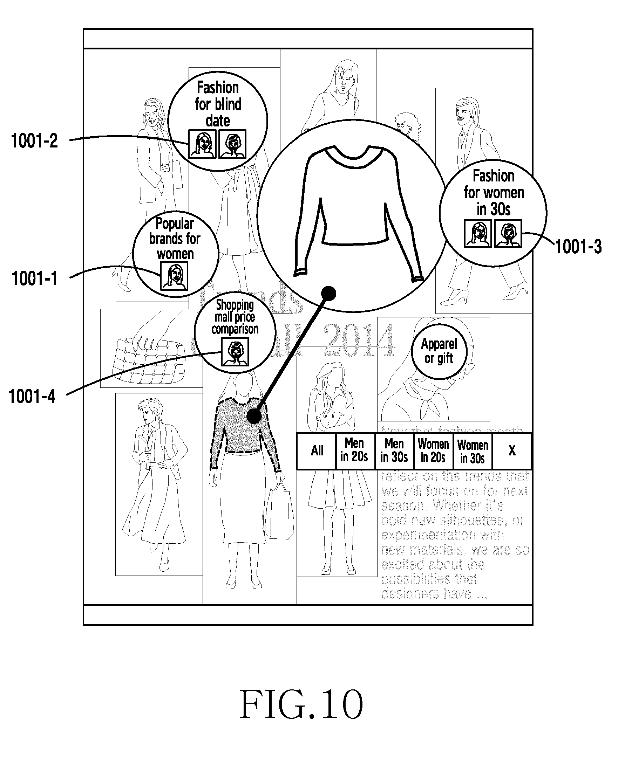

Additionally, the digital magazine control module 320 checks the information on other users, which is in association with a user account, and informs of the related keywords that have been selected by other users. That is, the related keywords at 1001-1, 1001-2, 1001-3 and 1001-4, which have been used by the acquaintances of the user, are provided to the user so that the information of concern is shared with the user and the acquaintances in order to thereby improve the reliability of information. For example, when displaying the related keywords for the item selected by the user, as shown in FIG. 10, the digital magazine control module 320 displays the related keywords that have been selected by other users in association with the user account.

The processor 340, for example, receives instructions from other elements (such as the digital magazine control module 320, the memory 350, the input/output interface 360, the display 370, the communication interface 380, or the like) of the electronic device 301 through the bus 310, and decode the received instructions to thereby perform the calculation or the data processing according to the decoded instructions. The memory 350 stores instructions or data received from or created by the processor 340 or other elements (such as the digital magazine control module 320, the memory 350, the input/output interface 360, the display 370, the communication interface 380, or the like). The memory 350, for example, includes programming modules, such as a kernel 351, middleware 353, an application programming interface (API) 355, or applications 357. Here, each of the programming modules is implemented by software, firmware, hardware, or a combination of at least two of them.

The input/output interface 360 transfers instructions or data input by the user through input devices (such as sensors, a keyboard, or a touch screen) to the digital magazine control module 320, the processor 340, the memory 350, or the communication interface 380 through, for example, the bus 310. For example, the input/output interface 360 provides the data on the user's touch input through the touch screen to the processor 340.

The display 370 displays various pieces of information (such as multimedia data, or text data) to the user. For example, the display 370 displays instructions or data received from the digital magazine control module 320, the processor 340, the memory 350, and the communication interface 380 through the bus 310.

The communication interface 380 connects the communication between the electronic device 301 and an external device (such as the server 201). For example, the communication interface 380 is connected to a network 382 through wireless communication in order to thereby communicate with the server 201. The wireless communication, for example, include at least one of Wifi, BT, BLE, NFC, satellite communication (such as the GPS), or cellular communication (such as LTE, LTE- A, CDMA, WCDMA, UMTS, WiBro, GSM, or the like).

According to one embodiment, the protocol (such as a transport layer protocol, a data link layer protocol, or a physical layer protocol) for communication between the electronic device 301 and the server 201 is supported by at least one of the applications, the API, the middleware, or the kernel, which are included in the memory 350, or the communication interface 380.

According to various embodiments, the electronic device includes a display configured to display the content that contains at least a first item; an input interface configured to detect an input for at least the first item contained in the content and a processor configured to, when an input for the first item contained in the content is detected, displays, on the display, at least one piece of information corresponding to user information of the electronic device among information related to the first item.

According to various embodiments, the information related to the first item includes at least one of price information on the first item, additional information on the first item, or related keywords for the first item, and the user information includes at least one of age, gender, goods of interest, item purchase records, or content using records.

According to various embodiments, the information related to the first item is separated into a plurality of groups according to age and gender, and the processor displays at least one piece of information that is included in the group corresponding to the age and gender of a user, among the information related to the first item, on the display.

According to various embodiments, the processor, based on the number of times that the user selects at least one piece of information corresponding to the user information, control at least one of a display size, a display position, a display color, or the transparency of the at least one piece of information.

According to various embodiments, the processor changes at least one of the display size, the display position, the display color, or the transparency of the at least one piece of information, based on at least one of a preset minimum value, a preset default value, the number of times that the user selects the at least one piece of information, or the first selection for the at least one piece of information.

According to various embodiments, the processor applies a highlighting effect to the first item of which the input has been detected, and enlarges the first item of which the input has been detected to be additionally displayed.

According to various embodiments, the processor detects the input for the first item additionally displayed through the input interface, and performs at least one of the functions including rotating the first item, further enlarging the first item, or reducing the first item.

According to various embodiments, the processor may: detect an input for first information among at least one piece of information corresponding to the user information through the input interface; perform the searching on the basis the first item and the first information of which the input has been detected; and display the searching result. According to various embodiments, the processor detects an input for first information among at least one piece of information corresponding to the user information through the input interface, and displays the first item and sub-information corresponding to the first information of which the input has been detected. According to various embodiments, the processor identifies at least one piece of information of other users in association with a user's account, and makes a control to display a graphic showing the identified information that has been selected by other users among the information related to the first item.

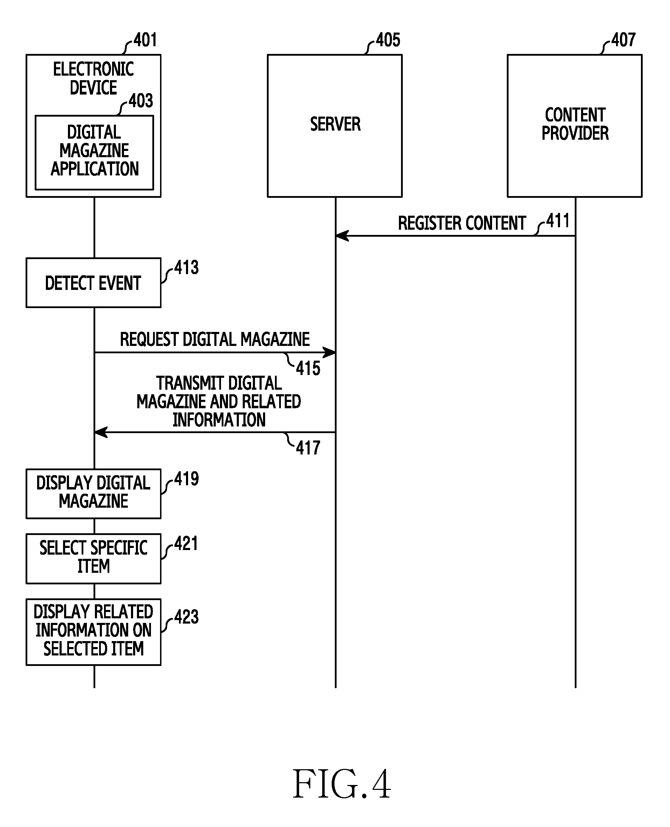

FIG. 4 is an example diagram illustrating a signal flow for controlling the digital magazine in an electronic device according to this disclosure. Referring to FIG. 4, in operation 411, a content provider 407 registers the content in the server 405. For example, the content provider 407 registers a digital magazine that contains at least one item. For another example, the content provider 407 registers at least one item in the server 405, and the server 405 creates the digital magazine that contains at least one item registered by the content provider 407.

In operation 413, the electronic device 401 identifies the user input to detect a digital magazine search event. For example, when the electronic device 401 identifies the user input for executing the digital magazine application 403, the electronic device 401 detects the occurrence of the digital magazine search event. When the digital magazine search event is detected, the electronic device 401 transmits a message for requesting the digital magazine to the server 405 through the digital magazine application 403 in operation 415. When the message for requesting the digital magazine is received, the server 405 transmits the digital magazine that includes at least one item, and information related to one or more items contained in the digital magazine in operation 417.

When the electronic device 401 receives the digital magazine and the information related to one or more items contained in the digital magazine, the electronic device 401 displays the digital magazine through the digital magazine application in operation 419. According to an embodiment of the present disclosure, the electronic device 401 provides a user interface by which the user selects at least one item contained in the digital magazine.

The electronic device 401 selects a specific item contained in the digital magazine according to the user input in operation 421, and displays the item-related information corresponding to the selected specific item in operation 423. The item-related information, according to an embodiment of the present disclosure, includes the price information, the additional information, and the related keywords. According to an embodiment of the present disclosure, the electronic device 401, based on the pre-obtained user information, extracts only the related keywords corresponding to the user information from the related keywords for the specific item, and displays the same. For example, if the user information shows "gender: female, age: twenties," the electronic device 401, as shown in FIG. 6A, selectively displays, on the display, only the related keywords at 605-1, 605-2, 605-3, 605-4, 605-5, 605-6, 605-7, and 605-8 corresponding to "female in twenties" among various related keywords of the specific items 601 and 603 selected by the user. For another example, if the user information shows "gender: male, age: thirties," the electronic device 401, as shown in FIG. 6B, selectively displays, on the display, only the related keywords at 615-1, 615-2, 615-3, 615-4, and 615-5 corresponding to "male in thirties" among various related keywords of the specific items 611 and 613 selected by the user. According to an embodiment of the present disclosure, the electronic device 401 controls the related keyword, which has been most frequently selected by the users, to be most highly highlighted by adjusting the font size of the related keyword, the size of the area where the related keyword is to be displayed, the position of the area where the related keyword is to be displayed (such as a distance to the corresponding item), the transparency of the area where the related keyword is to be displayed, and/or the display color of the related keyword. According to an embodiment of the present disclosure, when a specific related keyword is selected by the user while the related keywords for a specific item are displayed, the electronic device 401 obtains the searching result using the selected related keyword from the server 405 through the digital magazine application 403, and displays the same. According to another embodiment of the present disclosure, if a specific related keyword is selected by the user while the related keywords for a specific item are displayed, the electronic device 401 displays the related sub-keywords corresponding to the selected related keyword. According to another embodiment of the present disclosure, when displaying the related keywords corresponding to a specific item, the electronic device 401 identify the information on other users in association with the user account, and displays an additional graphic in order to inform of the identified related keywords that have been selected by other users.

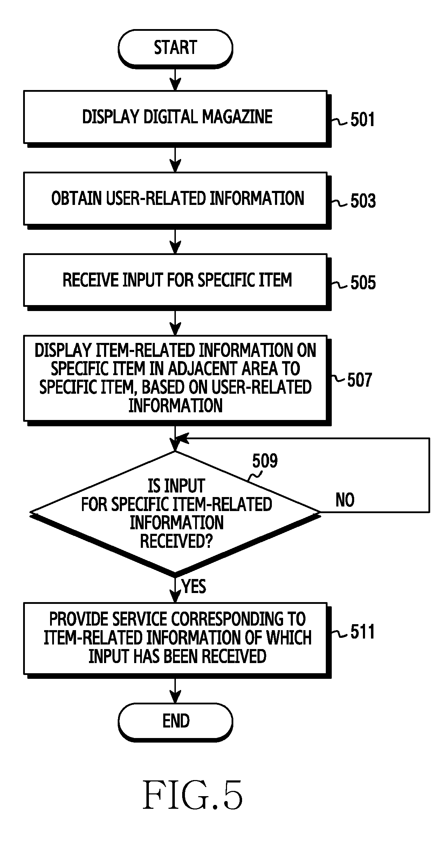

FIG. 5 is flowchart illustrating an example operation of an electronic device according to this disclosure. Referring to FIG. 5, the electronic device displays the digital magazine in operation 501. For example, the electronic device may: detect the execution of the application for the digital magazine service by a user input; make a request to the server for the digital magazine; and display the digital magazine received from the server on the screen. According to an embodiment of the present disclosure, when receiving the digital magazine from the server, the electronic device receives the item-related information on at least one item contained in the digital magazine.

The electronic device obtains the user-related information in operation 503. For example, the user-related information includes the user's personal information, such as age, gender, occupation, or the like. The electronic device receives an input for a specific item contained in the digital magazine in operation 505. For example, the electronic device receives a user input for selecting a specific item contained in the digital magazine.

In operation 507, the electronic device, based on the pre-obtained user-related information, displays the item-related information on the specific item in the adjacent area to the specific item. For example, the electronic device displays, in the adjacent area to the specific item, only the item-related information corresponding to the user information among the item-related information on the specific item, which is received from the server. According to an embodiment of the present disclosure, the electronic device displays the related keyword, which has been most frequently selected by the users, to be most highly highlighted by controlling at least one of the display size of the item-related information, the size of the display area, the position of the display area, the distance to the item, the display transparency, and/or the display color.

In operation 509, the electronic device checks whether or not an input for the item-related information is received. If the input for the item-related information is received, the electronic device provides a service corresponding to the item-related information with respect to the received input in operation 511. For example, when an input for a specific related keyword, among the item-related information displayed on the screen, is received, the electronic device performs the searching with respect to the corresponding item using the corresponding related keyword, and displays the searching result on the screen. For another example, when an input for registering a specific item in the wish list, among the item-related information displayed on the screen, is received, the electronic device registers the corresponding item in the wish list. For another example, if the touch input for a specific related keyword, among the item-related information displayed on the screen, is maintained over a specific period of time or more, the electronic device displays the related sub-keywords corresponding to the specific related keyword. Afterwards, the electronic device terminates the operation according to the present embodiment.

Although age and gender are considered as the user information to display the item-related information in the embodiments of FIGs. 1 to 10, the present disclosure is not limited thereto. For example, according to various embodiments of the present disclosure, the item-related information is displayed by considering various pieces of user information, such as goods of interest, digital magazine subscription records (digital magazine using records), product purchase records, or the like.

According to various embodiments, the operation method of an electronic device include detecting an input for at least a first item contained in the content and if an input for the first item contained in the content is detected, displaying at least one piece of information corresponding to user information of the electronic device among information related to the first item.

According to various embodiments, the information related to the first item includes at least one of price information on the first item, additional information on the first item, or related keywords for the first item, and the user information includes at least one of age, gender, goods of interest, item purchase records, or content using records. According to various embodiments, the information related to the first item is separated into a plurality of groups according to age and gender, and the displaying of at least one piece of information corresponding to the user information of the electronic device among the information related to the first item includes displaying at least one piece of information that is included in the group corresponding to the age and gender of a user, among the information related to the first item.

According to various embodiments, the displaying of at least one piece of information corresponding to the user information of the electronic device among the information related to the first item includes, based on the number of times that the user selects at least one piece of information corresponding to the user information, controlling at least one of a display size, a display position, a display color, or the transparency of the at least one piece of information.

According to various embodiments, the displaying of at least one piece of information corresponding to the user information of the electronic device among the information related to the first item includes changing at least one of the display size, the display position, the display color, or the transparency of the at least one piece of information, based on at least one of a preset minimum value, a preset default value, the number of times that the user selects the at least one piece of information, or the first selection for the at least one piece of information.

According to various embodiments, the method further includes applying a highlighting effect to the first item of which the input has been detected; and enlarging the first item of which the input has been detected to be additionally displayed.

According to various embodiments, the method further includes detecting the input for the first item additionally displayed; and performing at least one of the functions, such as rotating the first item, further enlarging the first item, or reducing the first item.

According to various embodiments, the method further includes detecting an input for first information among at least one piece of information corresponding to the user information; performs the searching on the basis the first item and the first information of which the input has been detected; and displaying the searching result.

According to various embodiments, the method further includes detecting an input for first information among at least one piece of information corresponding to the user information; and displaying the first item and sub-information corresponding to the first information of which the input has been detected.

According to various embodiments, the displaying of at least one piece of information corresponding to the user information of the electronic device among the information related to the first item includes identifying at least one piece of information of other users in association with a user's account; and displaying a graphic showing the identified information that has been selected by other users among the information related to the first item.

According to various embodiments, a computer-readable recording medium includes one or more programs that include commands to execute the operations of: detecting an input for at least a first item contained in the content; and if an input for the first item contained in the content is detected, displaying at least one piece of information corresponding to user information of the electronic device among information related to the first item.

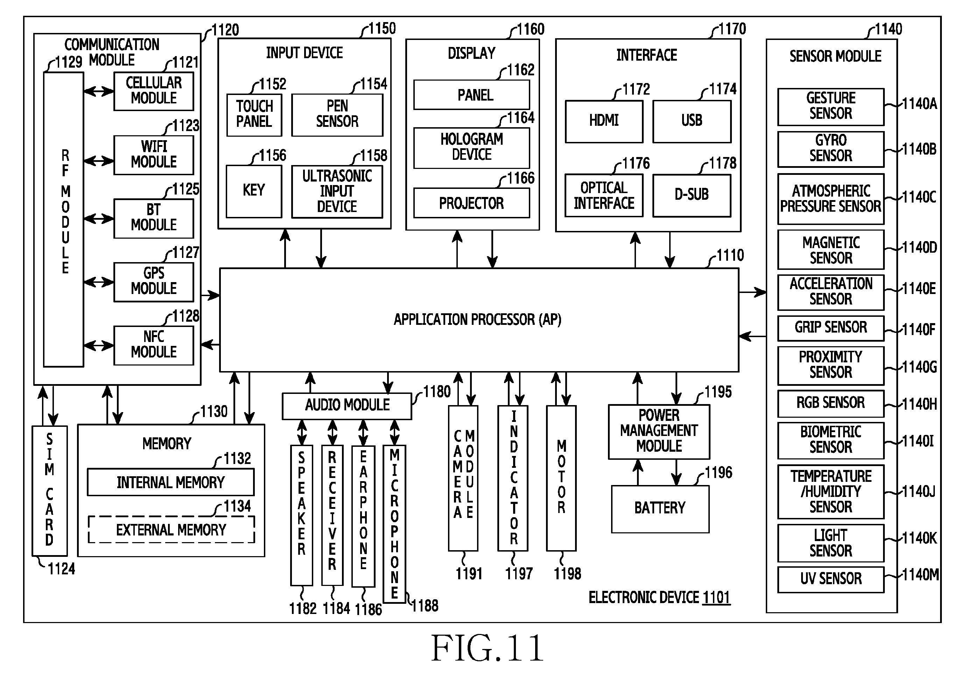

FIG. 11 is a diagram illustrating an example electronic device 1101 according to this disclosure. The electronic device 1101 can include all or some of the components of the electronic device 301 illustrated in FIG. 3. Referring to FIG. 11, the electronic device 1101 includes one or more application processors (AP) 1110, a communication module 1120, a subscriber identification module (SIM) card 1124, a memory 1130, a sensor module 1140, an input device 1150, a display 1160, an interface 1170, an audio module 1180, a camera module 1191, a power management module 1195, a battery 1196, an indicator 1197, or a motor 1198.

The AP 1110 drives an OS or an application to control a plurality of hardware or software elements connected to the AP 1110 and performs various data processes including multimedia data and operations. The AP 1110 is implemented, for example, as a System on Chip (SoC). The AP 1110 further includes a Graphic Processing Unit (GPU).

The communication module 1120 (such as the communication interface 380) transmits and receives data in the communication between the electronic device 1101 (such as the electronic device 301) and other electronic devices (such as the server 201) connected over the network. The communication module 1120 includes a cellular module 1121, a WiFi module 1123, a BT module 1125, a GPS module 1127, an NFC module 1128, and a Radio Frequency (RF) module 1129.

The cellular module 1121 provides voice communication, image communication, a short message service, or an Internet service, or the like via a communication network (such as LTE, LTE-A, CDMA, WCDMA, UMTS, WiBro, or GSM, or the like). Also, the cellular module 1121 performs discrimination and authentication of an electronic device within a communication network using, for example, a Subscriber Identify Module (such as a SIM card 1124). The cellular module 1121 performs at least a portion of functions that is provided by the AP 1110. For example, the cellular module 1121 performs at least part of a multimedia control function.

The cellular module 1121 includes a Communication Processor (CP). The cellular module 1121 is implemented using, for example, a SoC. While the components of the cellular module 1121 (such as the CP), the memory 1130, and the power management module 1195 are separated from the AP 1110 in FIG. 11, the AP 1110 includes at least part (such as the cellular module 1121) of the above-stated components.

The AP 1110 or the cellular module 1121 (such as the CP) loads and processes the instruction or the data received from its connected non-volatile memory or at least one of the other components, in a volatile memory. Also, the AP 1110 or the cellular module 1121 stores data received from or generated by at least one of the other components, in the non-volatile memory.

Each of the WiFi module 1123, the BT module 1125, the GPS module 1127, or the NFC module 1128 includes, for example, a processor for processing data transmitted/received via a relevant module. While the cellular module 1121, the WiFi module 1123, the BT module 1125, the GPS module 1127, and the NFC module 1128 are separated from each other in FIG. 11, at least part (such as at least two) of the cellular module 1121, the WiFi module 1123, the BT module 1125, the GPS module 1127, and the NFC module 1128 are included in a single Integrated Chip (IC) or an IC package. For example, at least part (such as the CP corresponding to the cellular module 1121 and the WiFi processor corresponding to the WiFi module 1123) of the processors corresponding to the cellular module 1121, the WiFi module 1123, the BT module 1125, the GPS module 1127, and the NFC module 1128 can be implemented using a single SoC.

The RF module 1129 transmits and receives the data, for example, RF signals. The RF module 1129 includes, for example, a transceiver, a Power Amp Module (PAM), a frequency filter, and a Low Noise Amplifier (LNA), which are not shown. Also, the RF module 1129 further includes a component, for example, a conductor or a conducting wire, for sending and receiving electromagnetic waves in free space during the wireless communication. While the cellular module 1121, the WiFi module 1123, the BT module 1125, the GPS module 1127, and the NFC module 1128 share the single RF module 1129 in FIG. 11, at least one of the cellular module 1121, the WiFi module 1123, the BT module 1125, the GPS module 1127, and the NFC module 1128 transmits and receives the RF signals via a separate RF module.

The SIM card 1124 is inserted into a slot formed in a specific position of the electronic device 1101. The SIM card 1124 includes unique identify information (such as Integrated Circuit Card Identifier (ICCID)) or subscriber information (such as International Mobile Subscriber Identity (IMSI)).

The memory 1130 (such as the memory 330) includes an internal memory 1132 or an external memory 1134. The internal memory 1132 includes, for example, at least one of a volatile memory (such as Dynamic RAM (DRAM), Static RAM (SRAM), Synchronous Dynamic RAM (SDRAM)) and a non-volatile memory (such as One Time Programmable ROM (OTPROM), Programmable ROM (PROM), Erasable and Programmable ROM (EPROM), Electrically Erasable and Programmable ROM (EEPROM), mask ROM, flash ROM, NAND flash memory, NOR flash memory, or the like).

The internal memory 1132 is a Solid State Drive (SSD). The external memory 1134 further includes a flash drive, for example, Compact Flash (CF), Secure Digital (SD), Micro Secure Digital (Micro-SD), Mini Secure Digital (Mini-SD), extreme Digital (xD), or a memory stick. The external memory 1134 is functionally connected with the electronic device 1101 via various interfaces. The electronic device 1101 further includes a storage device (or a storage medium) such as hard drive.

The sensor module 1140 measures a physical quantity or detects an operation state of the electronic device 1101 and converts the measured or detected information to an electric signal. The sensor module 1140 includes, for example, at least one of a gesture sensor 1140A, a gyro sensor 1140B, an atmospheric pressure sensor 1140C, a magnetic sensor 1140D, an acceleration sensor 1140E, a grip sensor 1140F, a proximity sensor 1140G, a color sensor 1140H (such as red, green, blue (RGB) sensor), a living body sensor 1140I, a temperature/humidity sensor 1140J, an illumination sensor 1140K, or an Ultra Violet (UV) sensor 1140M. Additionally or alternatively, the sensor module 1140 includes, for example, an E-nose sensor, an electromyography (EMG) sensor, an electroencephalogram (EEG) sensor, an electrocardiogram (ECG) sensor, an infrared (IR) sensor, an iris sensor, or a fingerprint sensor, or the like The sensor module 1140 further includes a control circuit for controlling at least one sensor belonging thereto.

The input device 1150 includes a touch panel 1152, a (digital) pen sensor 1154, a key 1156, or an ultrasonic input device 1158. The touch panel 1152 recognizes a touch input using at least one of capacitive, resistive, infrared, or ultrasonic methods. Also, the touch panel 1152 further includes a control circuit. A capacitive touch panel performs detection by a physical contact or proximity recognition. The touch panel 1152 further includes a tactile layer. In this case, the touch panel 1152 provides a tactile reaction to a user.

The (digital) pen sensor 1154 is implemented using, for example, the same or similar method as or to the user's touch input, or using a separate recognition sheet. For example, the key 1156 includes, for example, a physical button, an optical key, or a keypad. The ultrasonic input device 1158 is a device capable of obtaining data by detecting microwaves through a microphone (such as a microphone 1188) in the electronic device 1101 through an input tool which generates an ultrasonic signal, allows radio frequency identification. The electronic device 1101 receives user input from an external device (such as a server or an Internet of Things (IoT) device) connected using the communication module 1120.

The display 1160 (such as the display 370) includes a panel 1162, a hologram device 1164, or a projector 1166. The panel 1162 is, for example, a Liquid Crystal Display (LCD), or an Active-Matrix Organic Light-Emitting Diode (AM-OLED), or the like. The panel 1162 is implemented, for example, such that it is flexible, transparent, or wearable. The panel 1162 is configured as one module together with the touch panel 1152. The hologram device 1164 projects a three-dimensional image in the air using interferences of light. The projector 1166 projects light onto a screen to display an image. The screen is positioned, for example, inside or outside the electronic device 1101. The display 1160 further includes a control circuit for controlling the panel 1162, the hologram device 1164, or the projector 1166.

The interface 1170 includes, for example, a High-Definition Multimedia Interface (HDMI) 1172, a Universal Serial Bus (USB) 1174, an optical interface 1176, or a D-subminiature (D-sub) 1178. The interface 1170 is included, for example, in the communication interface 380 illustrated in FIG. 3. Additionally or alternatively, the interface 1170 includes, for example, a Mobile High-definition Link (MHL) interface, a Secure Digital (SD) card/Multi-Media Card (MMC) interface, or an Infrared Data Association (IrDA) standard interface.

The audio module 1180 converts a sound and an electric signal in dual directions. At least a partial element of the audio module 1180 is included, for example, in the I/O interface 360 illustrated in FIG. 3. The audio module 1180 processes sound information input or output via, for example, a speaker 1182, a receiver 1184, an earphone 1186, or the microphone 1188, or the like.

The camera module 1191 is a device that captures a still image and a moving picture. The camera module 1191 includes one or more image sensors (such as a front sensor or a rear sensor), a lens, an Image Signal Processor (ISP), or a flash (such as an LED or xenon lamp). The power management module 1195 manages power of the electronic device 1101. The power management module 1195 includes, for example, a Power Management Integrated Circuit (PMIC), a charger Integrated Circuit (IC), or a battery or fuel gauge.

The PMIC is mounted in, for example, an IC or a SoC conductor. The charging type is divided to a wired type and a wireless type. The charger IC charges the battery, and prevents overvoltage or overcurrent flow from the charger. The charger IC includes a charger IC for at least one of the wired charging type or the wireless charging type. The wireless charging type includes, for example, a magnetic resonance type, a magnetic induction type, and a microwave type, and adds an additional circuit for the wireless charging, for example, a circuit such as coil loop, resonance circuit, or rectifier. The battery gauge can, for example, measure the remaining capacity of the battery 1196 and the voltage, the current, or the temperature of the charging. The battery 1196 stores or generates electricity, and supplies the power to the electronic device 1101 using the stored or generated electricity. The battery 1196 includes, for example, a rechargeable battery or a solar battery.

The indicator 1197 displays a specific state of the electronic device 1101 or a portion thereof (such as the AP 1110), for example, a booting state, a message state, or a charging state, or the like. The motor 1198 converts an electric signal to mechanical vibration. The electronic device 1101 includes a processor (such as a GPU) for supporting a mobile TV. The processor for supporting the mobile TV processes media data corresponding to standards, for example, such as Digital Multimedia Broadcasting (DMB), Digital Video Broadcasting (DVB), or a media flow, or the like.

In the present disclosure, with regard to each item contained in the digital magazine, the information related to the corresponding item is registered in the server. If the item contained in the digital magazine is selected in the electronic device, the information related to the corresponding item is provided based on the user information, and the displaying of the item-related information is controlled based on the number of times that each piece of the item-related information is selected, so that various pieces of information on the items contained in the digital magazine is directly provided to the user while viewing the digital magazine.

Although the present disclosure has been described with an exemplary embodiment, various changes and modifications may be suggested to one skilled in the art. It is intended that the present disclosure encompass such changes and modifications as fall within the scope of the appended claims.

**Claims**

1. An electronic device comprising:

   a display configured to display content that contains at least a first item;
   an input interface configured to detect an input for at least the first item contained in the content; and
   a processor configured to, when an input for the first item contained in the content is detected, display, on the display, at least one piece of information corresponding to user information of the electronic device among information related to the first item.

2. The electronic device of claim 1, wherein the information related to the first item includes at least one of price information on the first item, additional information on the first item, or related keywords for the first item, and wherein the user information includes at least one of age, gender, goods of interest, item purchase records, or content using records.

3. The electronic device of claim 1, wherein the information related to the first item is separated into a plurality of groups according to age and gender, and the processor is configured to display at least one piece of information that is included in the group corresponding to the age and gender of a user, among the information related to the first item, on the display.

4. The electronic device of claim 1, wherein the processor is configured to, based on the number of times that the user selects at least one piece of information corresponding to the user information, control at least one of a display size, a display position, a display color, or the transparency of the at least one piece of information.

5. The electronic device of claim 4, wherein the processor is configured to change at least one of the display size, the display position, the display color, or the transparency of the at least one piece of information, based on at least one of a preset minimum value, a preset default value, a number of times that the user selects the at least one piece of information, or the first selection for the at least one piece of information.

6. The electronic device of claim 1, wherein the processor is configured to apply a highlighting effect to the first item of the detected input, enlarge the first item of the detected input, and display the enlarged first item.

7. The electronic device of claim 6, wherein the processor is configured to detect the input for the first item additionally displayed through the input interface, and perform at least one of the functions including rotating the first item, further enlarging the first item, or reducing the first item.

8. The electronic device of claim 1, wherein the processor is configured to detect an input for first information among at least one piece of information corresponding to the user information through the input interface, perform the searching on the basis the first item and the first information of which the input has been detected, and display the searching result.

9. A method of an electronic device, the method comprising:

   detecting an input for at least a first item contained in content; and
   when the input for the first item contained in the content is detected, displaying at least one piece of information corresponding to user information of the electronic device among information related to the first item.

10. The method of claim 9, wherein the information related to the first item includes at least one of price information on the first item, additional information on the first item, or related keywords for the first item, and wherein the user information includes at least one of age, gender, goods of interest, item purchase records, or content using records.

11. The method of claim 9, wherein the information related to the first item is separated into a plurality of groups according to age and gender, and
    wherein displaying the at least one piece of information corresponding to the user information of the electronic device among the information related to the first item comprises displaying at least one piece of information that is included in the group corresponding to the age and gender of the user, among the information related to the first item.

12. The method of claim 9, wherein displaying the at least one piece of information corresponding to the user information of the electronic device among the information related to the first item comprises, based on a number of times that a user selects the at least one piece of information corresponding to the user information, controlling at least one of a display size, a display position, a display color, or the transparency of the at least one piece of information.

13. The method of claim 9, further comprising:

applying a highlighting effect to the first item of the detected input; and
enlarging the first item of the detected input to be additionally displayed.

14. The method of claim 9, further comprising:

detecting an input for first information among the at least one piece of information corresponding to the user information; and
displaying the first item and sub-information corresponding to the first information of the detected input.

15. The method of claim 9, wherein displaying the at least one piece of information corresponding to the user information of the electronic device among the information related to the first item comprises:

identifying at least one piece of information of other users in association with a user's account; and
displaying a graphic showing the identified information that has been selected by the other users among the information related to the first item.

FIG.1

201

| MEMORY<br>*213* | ←→ | PROCESSOR<br>*205*<br>DIGITAL<br>MAGAZINE<br>MANAGER<br>*207* | ←→ | COMMUNICATION<br>INTERFACE<br>*203* |

# FIG.2

EP 3 009 974 A1

300

301

**ELECTRONIC DEVICE**

320
**DIGITAL MAGAZINE CONTROL MODULE**

340
**PROCESSOR**

350
**MEMORY**

357
**APPLICATIONS**

355
**APPLICATION PROGRAMMING INTERFACE (API)**

353
**MIDDLEWARE**

351
**KERNEL**

350

310
**BUS**

360
**INPUT/OUTPUT INTERFACE**

370
**DISPLAY**

380
**COMMUNICATION INTERFACE**

382
**NETWORK**

201
**SERVER**

FIG.3

EP 3 009 974 A1

FIG.4

19

START

DISPLAY DIGITAL MAGAZINE ~ 501

OBTAIN USER-RELATED INFORMATION ~ 503

RECEIVE INPUT FOR SPECIFIC ITEM ~ 505

DISPLAY ITEM-RELATED INFORMATION ON SPECIFIC ITEM IN ADJACENT AREA TO SPECIFIC ITEM, BASED ON USER-RELATED INFORMATION ~ 507

509
IS INPUT FOR SPECIFIC ITEM-RELATED INFORMATION RECEIVED? — NO

YES

PROVIDE SERVICE CORRESPONDING TO ITEM-RELATED INFORMATION OF WHICH INPUT HAS BEEN RECEIVED ~ 511

END

FIG.5

FIG.6A

FIG.6B

EP 3 009 974 A1

FIG.6C

FIG.6D

FIG.7

FIG.8A

FIG.8B

FIG.8C

FIG.9

FIG.10

FIG.11

COMMUNICATION MODULE 1120

RF MODULE 1129

CELLULAR MODULE 1121
WIFI MODULE 1123
BT MODULE 1125
GPS MODULE 1127
NFC MODULE 1128

SIM CARD 1124

INPUT DEVICE 1150
TOUCH PANEL 1152
PEN SENSOR 1154
KEY 1156
ULTRASONIC INPUT DEVICE 1158

DISPLAY 1160
PANEL 1162
HOLOGRAM DEVICE 1164
PROJECTOR 1166

INTERFACE 1170
HDMI 1172
USB 1174
OPTICAL INTERFACE 1176
D-SUB 1178

SENSOR MODULE 1140
GESTURE SENSOR 1140A
GYRO SENSOR 1140B
ATMOSPHERIC PRESSURE SENSOR 1140C
MAGNETIC SENSOR 1140D
ACCELERATION SENSOR 1140E
GRIP SENSOR 1140F
PROXIMITY SENSOR 1140G
RGB SENSOR 1140H
BIOMETRIC SENSOR 1140I
TEMPERATURE /HUMIDITY SENSOR 1140J
LIGHT SENSOR 1140K
UV SENSOR 1140M

APPLICATION PROCESSOR (AP) 1110

MEMORY 1130
INTERNAL MEMORY 1132
EXTERNAL MEMORY 1134

AUDIO MODULE 1180
SPEAKER 1182
RECEIVER 1184
EARPHONE 1186
MICROPHONE 1188

CAMERA MODULE 1191
INDICATOR 1197
MOTOR 1198

POWER MANAGEMENT MODULE 1195
BATTERY 1196

ELECTRONIC DEVICE 1101

EP 3 009 974 A1

Europäisches
Patentamt

European
Patent Office

Office européen
des brevets

## EUROPEAN SEARCH REPORT

Application Number

EP 15 18 9441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/067624 A1 (BABU DOINA [DK]) 6 March 2014 (2014-03-06) | 1-6,8-15 | INV. G06Q30/00 |
| Y | * figure 2J * | 7 | G06Q30/06 |
| Y | Anonymous: "TruView 3D - Interactive 3D Photograpy Software", <br><br>, <br> 2 October 2014 (2014-10-02), XP055246913, Retrieved from the Internet: URL:https://web.archive.org/web/2014100219 3024/http://www.ortery.com/Photography-Equ ipment/3D-Photography-Equipment/TruView-3D -Photography-Software [retrieved on 2016-02-02] * the whole document * | 7 | |
| A | Anonymous: "Ortery HTML5 Viewer", <br><br>, <br> 2 October 2014 (2014-10-02), XP055246915, Retrieved from the Internet: URL:https://web.archive.org/web/2014100206 2928/http://truview.ortery.com/HTMLJavaScr ipt/UnderArmour/HTML5Viewer.html [retrieved on 2016-02-02] * the whole document * | 7 | |
| A | US 2010/306702 A1 (WARNER PETER [FR]) 2 December 2010 (2010-12-02) * paragraph [0049]; figures 6, 10-12 * | 1-15 | |

TECHNICAL FIELDS
SEARCHED (IPC)

G06Q

The present search report has been drawn up for all claims

| Place of search | Date of completion of the search | Examiner |
|---|---|---|
| Munich | 9 February 2016 | Bîrlescu, V |

EPO FORM 1503 03.82 (P04C01)

**EP 3 009 974 A1**

## ANNEX TO THE EUROPEAN SEARCH REPORT
## ON EUROPEAN PATENT APPLICATION NO.

EP 15 18 9441

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2016

| Patent document cited in search report | Publication date | Patent family member(s) | Publication date |
|---|---|---|---|
| US 2014067624 A1 | 06-03-2014 | US 2014067624 A1<br>WO 2014039592 A2 | 06-03-2014<br>13-03-2014 |
| US 2010306702 A1 | 02-12-2010 | AU 2010254344 A1<br>CN 102449588 A<br>CN 104657044 A<br>EP 2435900 A1<br>KR 20120025487 A<br>US 2010306702 A1<br>US 2014082557 A1<br>WO 2010138360 A1 | 22-12-2011<br>09-05-2012<br>27-05-2015<br>04-04-2012<br>15-03-2012<br>02-12-2010<br>20-03-2014<br>02-12-2010 |

EPO FORM P0459

For more details about this annex : see Official Journal of the European Patent Office, No. 12/82